# EUROPÄISCHE PATENTSCHRIFT

(11) **EP 0 524 588 B1**
(45) Veröffentlichungstag und Bekanntmachung des Hinweises auf die Patenterteilung: **05.06.1996**
(21) Anmeldenummer: 92112408.7
(22) Anmeldetag: 20.07.1992
(51) Int. Cl.: B23Q 16/02, F15B 15/00

(54) **Schrittmotor, insbesondere als Stellglied für Maschinenkomponenten**
Step motor, especially as actuator for machine components
Moteur pas-à-pas, en particulier comme un actuateur pour des composants de machine

(30) Priorität: 22.07.1991 CH 2180/91
(43) Veröffentlichungstag der Anmeldung: 27.01.1993
(73) Patentinhaber: CHARLES RICHIGER AG, CH-3613 Steffisburg-Station (CH)
(72) Erfinder: Richiger, Jacques, CH-3627 Heimberg (CH)
(74) Vertreter: White, William

(56) Entgegenhaltungen:
- WO-A-90/05617
- DE-A- 2 158 094
- GB-A- 974 716
- GB-A- 1 101 901
- US-A- 3 661 059
- US-A- 4 742 614

## Beschreibung

Die vorliegende Erfindung betrifft einen Schrittmotor, enthaltend Steuerelemente und von diesen gesteuerte pneumatische Arbeitskolben mit konisch zugespitzten Kolbenspitzen, sowie einen durch diese Arbeitskolben schrittweise in Bewegung versetzbaren Läufer, der mit konischen Bohrungen versehen ist, wobei die Bohrungen für ein Zusammenwirken mit den Arbeitskolben ausgelegt sind.

Im Maschinenbau wird immer häufiger gefordert, dass sich Maschinen und Apparate auf ein externes Signal hin selbständig auf vorbestimmte Werte einstellen. Bis jetzt konnte diese Forderung nur mit elektrischen Stellantrieben, seien es Schritt- oder Gleichstrommotoren, erfüllt werden. Beide Antriebsarten benötigen eine relativ aufwendige Elektronik und der Gleichstromantrieb zusätzlich ein Messsystem. Dadurch entstehen, vor allem wenn mehrere einzustellende Achsen vorhanden sind, hohe Vorrichtungs- und Steuerungskosten, da neben den elektronischen Steuerungen für die Motoren noch eine zusätzliche Elektronik benötigt wird, die den Motorsystemen übergeordnet ist. Beide bekannten Antriebssysteme müssen nach einer Spannungsunterbrechung in den meisten Fällen vor der Einstellung auf die vorbestimmten Werte in eine vorher definierte Ausgangsposition gebracht werden. Falls die elektrischen Antriebe nicht mit einer Haltebremse versehen sind, werden diese bei einer Spannungsunterbrechung frei. Falls grosse Stellkräfte gefordert sind, werden entsprechend grosse Motoren oder Untersetzergetriebe benötigt.

Im US-Patent A-4742614 ist ein Schrittschaltmotor beschrieben, bei dem der Läufer mit aneinandergereihten konischen Vertiefungen versehen sind. Die Kolben haben entsprechend konische Spitzen für den Eingriff in die genannten konischen Vertiefungen. Durch diesen Eingriff ist auch bei Stromunterbrechung die jeweilige relative Stellung zwischen dem Läufer und Stator bestimmt. Da jedoch infolge der jeweils ausfahrenden Spitze bei jedem Fortschalten keine Verbindung mehr zwischen Läufer und Stator vorhanden ist, kann diese Position verloren gehen.

Der vorliegenden Erfindung liegt die Aufgabe zugrunde, bei Stellgliedern, bei denen die Geschwindigkeit der Einstelloperation vernachlässigbar ist, die Nachteile der bekannten elektrischen Stellglieder zu überwinden und einen Schrittmotor vorzuschlagen, dessen radiale Position gegenüber einer Eichlage auch nach einer Stromunterbrechung definiert ist.

Erfindungsgemäss wird dies dadurch erreicht, dass die Steuerelemente elektro-pneumatische Ventile und Wechselventile umfassen, wobei diese Wechselventile derart ausgeführt sind, dass eine Zeitverzögerung zwischen der Beaufschlagung des ausfahrenden Arbeitskolbens und der Beaufschlagung des einfahrenden Arbeitskolbens mit Druck bewirkt ist.

Gegenüber den bekannten elektrischen Antrieben und Stellgliedern in Form von Schrittmotoren hat der erfindungsgemässe pneumatische Schrittmotor im wesentlichen folgende Vorteile.
1. Der Motor ist ununterbrochen und in jeder Stellung blockiert. Dies gilt sowohl bei Spannungsunterbrechung wie auch bei einem Zusammenbruch der Druckluft oder bei beidem zusammen. Dadurch ist eine separate Haltebremse nicht erforderlich. Der Motor kann ohne Energiezufuhr monatelang in der letzten Position verbleiben, ohne dass sich diese verändern lässt oder vergessen geht.
2. Falls die nicht Gegenstand der vorliegenden Erfindung bildende elektronische Motorteuerung nicht vergisst, wo der Motor steht, ist es nicht nötig, nach einer Unterbrechung der Energiezufuhr, den Motor in eine definierte Ausgangs- oder Eichlage zurückzuführen, bevor er wieder positioniert werden kann.
3. Durch eine positive Rückmeldung der Kolbenbewegungen kann der Motor in jeder Stellung blockiert werden, ohne dass er Schaden nimmt oder Bewegungsimpulse verliert.
4. Neben der speicherprogrammierbaren Steuerung (SPS), die im Normalfall sowieso zur Steuerung der Maschine benötigt wird, braucht der erfindungsgemässe pneumatische Schrittmotor keine zusätzliche Elektronik. Pro erfindungsgemässen Schrittmotor genügen je vier elektrische Aus- und Eingänge der Steuerelektronik. Für einen Programmierer von speicherprogrammierbaren Steuerungen ist die Steuerung eines erfindungsgemässen Schrittmotores unproblematisch. Die Drehrichtung eines rotierenden Schrittmotors wird durch die Folge der Ausganssignale gegeben, z.B.
   Ausgang 1 - Ausgang 2 - Ausgang 3 - Ausgang 4 = rechtsdrehend und
   Ausgang 4 - Ausgang 3 - Ausgang 2 - Ausgang 1 = linksdrehend
5. Als Spannungsversorgung genügt eine übliche Versorgungsspannung für elektro-pneumatische Steuerelemente, d.h., die Spannung kann den jeweils gewünschten Verhältnissen angepasst werden.
6. Im Verhältnis zur Grösse gibt der erfindungsgemässe pneumatische Schrittmotor hohe Stellmomente ab.
7. Ein Explosionsschutz ist problemlos realisierbar.
8. Die Auflösung eines erfindungsgemässen pneumatischen Schrittmotors ist abhängig von der Ausführung von dessen Läufer und kann typischerweise 4,5° pro Schritt betragen. Andere Auflösungen, z.B. 1,8°, sind problemlos möglich.
9. Der erfindungsgemässe Schrittmotor kann sowohl zur Ausführung von Rotationsbewegunge als auch für Linearbewegungen eingesetzt werden. In diesem Fall sind dann die Kolben in Linienform angeordnet und bewegen sich entlang einer Lochschiene. Die Auflösung dieser Ausführungsvariante eines erfindungsgemässen Schrittmotors entspricht dann der Teilung der Schiene dividiert durch die Anzahl der Kolben, wobei in allen Ausführungsvarianten immer mindestens drei Kolben benötigt werden.
10. Falls mehrere erfindungsgemässe pneumatische Schrittmotoren synchron laufen müssen, können diese von den gleichen Ausgängen der Steuerelektronik aus gesteuert werden. In diesem Fall sind die Quittierungselemente vorteilhafterweise in Serie zu schalten.Dies bedeutet, dass wenn die Ausgänge der Steuerung genügend stark sind, beliebig viele erfindungsgemässe pneumatische Schrittmotoren von nur vier Aus- und vier Eingängen gesteuert werden können.

Diese Vorteile werden erfindungsgemäss bei rotierenden Schrittmotoren im wesentlichen dadurch erreicht, dass ein Rotor mit z.B. zwanzig konischen Bohrungen, die konzentrisch um das Rotorzentrum angebracht sind, durch mehrere auf dem gleichen Teilkreis wie die Bohrungen angebrachte Kolben in eine schrittweise Rotationsbewegung versetzt wird. Damit eine Rotationsbewegung entsteht, passt jeweils gleichzeitig nur ein Kolben in eine Bohrung im Rotor. Die anderen Kolben sind auf dem gegebenen Teilkreis um einen Winkel versetzt, der sich durch die Division der Teilung des Rotors durch die Anzahl der eingebauten Kolben ergibt. Die Auflösung des Schrittmotors ergibt sich durch die Multiplikation der Teilung des Rotors mit der Anzahl der vorhandenen Kolben. Durch entsprechende Steuerung der Kolben wird garantiert, dass immer zuerst eine Achsialbewegung eines Kolbens bis zum sicheren Eingriff in eine Bohrung im Rotor erfolgt, bevor der sich im Eingriff mit einer anderen Bohrung befindliche Kolben, der durch eine mechanische Haltevorrichtung gesichert sein kann, freigegeben wird. Letztere ist nicht unbedingt erforderlich, da durch geeignete Wahl der Winkel an den Kolbenspitzen und den konischen Bohrungen diese bereits selbsthemmend gestaltet sein und somit durch eine externe Kraft nicht aus dem Eingriff gedrückt werden können. Die Endlagen der Kolben können von jeweils einem Sensor erfasst und an die elektronische Steuerung zurückgemeldet werden. Als Sensoren können Reedschalter, Initiatoren oder ähnliche Kontaktelemente benutzt werden.

Die Erfindung wird hiernach an einem vorteilhaften Ausführungsbeispiel anhand der beiliegenden Zeichnung näher erläutert. In letzerer zeigen die
Fig. 1a, 1b und 1c mögliche Ausgangsstellungen der funktionswesentlichen Komponenten eines erfindungsgemässen pneumatischen Schrittmotors ohne mechanische Verriegelung der Kolben in den Bohrungen des Rotors, ohne Strom oder Druckzufuhr, die
Fig. 2a, 2b und 2c die Stellungen derselben Komponenten nach einem ersten Schritt des Schrittmotors, die
Fig. 3a, 3b und 3c die Stellungen derselben Komponenten nach einem zweiten Schritt des Schrittmotors, die
Fig. 4a, 4b und 4c die Stellungen derselben Komponenten nach einem dritten Schritt des Schrittmotors, die
Fig. 5a, 5b und 5c die Stellungen derselben Komponenten nach einem vierten Schritt des Schrittmotors, die
Fig. 6a, 6b, 6c und 6d die Funktionsweise einer möglichen Ausführungsvariante einer mechanischen Verriegelung der Kolben in den Bohrungen des Rotors in unterschiedlichen Zeitpunkten.

In allen Figuren illustrieren die Bezugszeichen
I - IV vier Kolbenstationen,
1 - 4 die vier Arbeitskolben der Kolbenstationen I bis IV,
5 - 8 vier 3/2 Wege-Ventile zur Steuerung der Arbeitskolben 1 - 4 in den Kolbenstationen I - IV,
9 - 12 vier Quittierschalter für das Quittieren der Erreichung der Endlage der Arbeitskolben 1 - 4 nach deren Hub,
13 und 15 zwei Wechselventile in ODER-Schaltung, die mit den Ventilen 6 und 8 verbunden sind und die Kolben 2 und 4 steuern,
14 und 16 zwei Wechselventile in ODER-Schaltung, die mit den 3/2 Wege-Ventilen 5 und 7 verbunden sind und die Arbeitskolben 1 und 3 steuern,
17 einen Rotor,
18 eine mechanische Verriegelungsplatte der Arbeitskolben 1 bis 4 in den Bohrungen 17a des Rotors 17 und
18 - 30 pneumatische Verbindungsleitungen zwischen den einzelnen Komponenten des erfindungsgemässen Schrittmotors.

Auf weitere Einzelteile des Schrittmotors wird hiernach anhand der Figurenbeschreibungen direkt eingegangen.

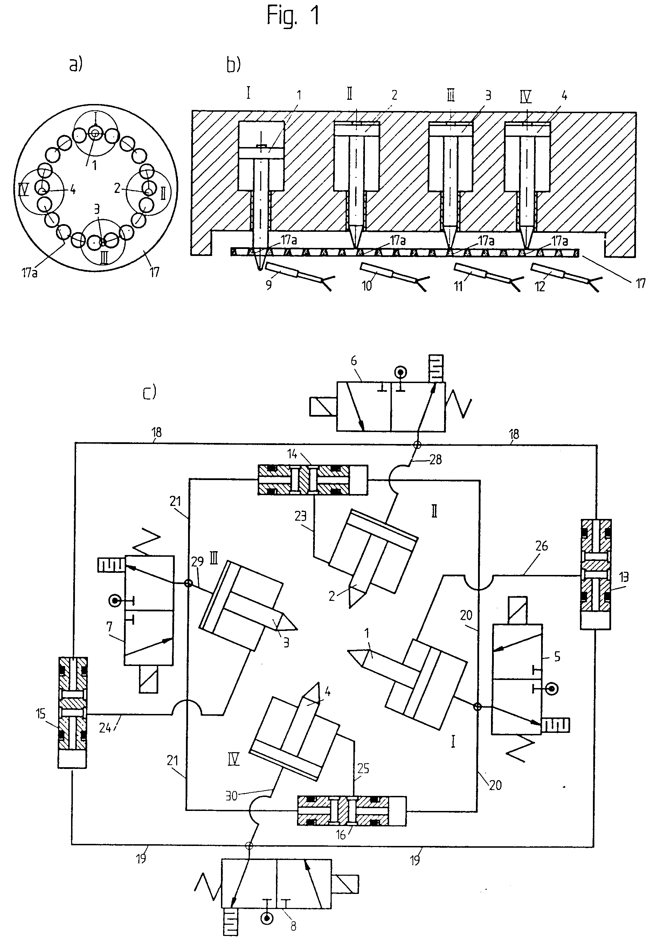

In Fig. 1a und 1b sind schematisch die mechanischen KOmponenten eines erfindungsgemässen pneumatischen Schrittmotors in einer zufälligen Ruhestellung dargestellt, wobei davon ausgegangen wird, dass er weder elektrisch noch pneumatisch Energie zugeführt erhält. In Fig. 1c sind die entsprechenden Stellungen der pneumatischen Komponenten des Schrittmotors schematisch dargestellt. Der Fachmann erkennt anhand der Fig. 1a und 1b, dass in dieser Stellung die vorteilhafterweise konische Kolbenspitze 1a eines ersten Arbeitskolbens 1 einer ersten Kolbenstation I in eine vorteilhafterweise entsprechend konische Bohrung 17a eines Rotors 17 eingreift und dadurch den vorteilhafterweise als kreisrunde um ihr Zentrum drehbare Scheibe ausgebildeten Rotor 17 blockiert. Vorteilhafterweise ist ein erster dem ersten Kolben 1 zugeordneter elektrischer oder elektronischer Quittierschalter 9 vorgesehen, der der in der Zeichnung nicht dargestellten Steuerelektronik das Erreichen der Arbeitskolbenendstellung quittiert. Die Winkel der Kolbenspitze 1a und der Bohrungen 17a im Rotor 17 werden vorteilhafterweise so gewählt, dass der Arbeitskolben 1 nicht durch eine äussere auf den Rotor 17 einwirkende Kraft aus der dargestellten eingefahrenen Endstellung verschoben werden kann, selbst wenn der Arbeitskolben 1 nicht mit Druckluft beaufschlagt ist, d.h., dass eine Selbsthemmung des Arbeitskolbens 1 in dieser Arbeitskolbenendstellung erreicht wird.

Anhand der Stellungen der Wechselventile 13 und 15 in Fig. 1c erkennt der Fachmann, dass das 3/2 Wege-Ventil 8 als letztes der 3/2 Wege-Ventile 5 bis 8 gearbeitet hat, derart, dass der hier schematisch dargestellte erfindungsgemässe pneumatische Schrittmotor vor dem Erreichen der dargestellten Ruheposition durch das Vorschieben des Arbeitskolbens 1 in eine Bohrung 17a des Rotors 17 und das Zurückziehen des Arbeitskolbens 3 aus einer anderen Bohrung 17a des Rotors 17 eine Rotationsbewegung im Gegenuhrzeigersinn gemacht hat. Aus dieser Figur erkennt der Fachmann weiter die pneumatischen Verbindungen der elektro-pneumatischen 3/2 Wege-Ventile 6 bis 8 mit den Wechselventilen 13 bis 16 in Form von Leitungen 18, 19, 20 und 21 und den Kolbenstationen I bis IV, resp. den Arbeitskolben 1 bis 4 über Leitungen 27, 28, 29 und 30 sowie die pneumatischen Verbindungen der Wechselventile 13 bis 16 mit den Kolbenstationen I bis IV über Leitungen 23, 24, 25 und 26.

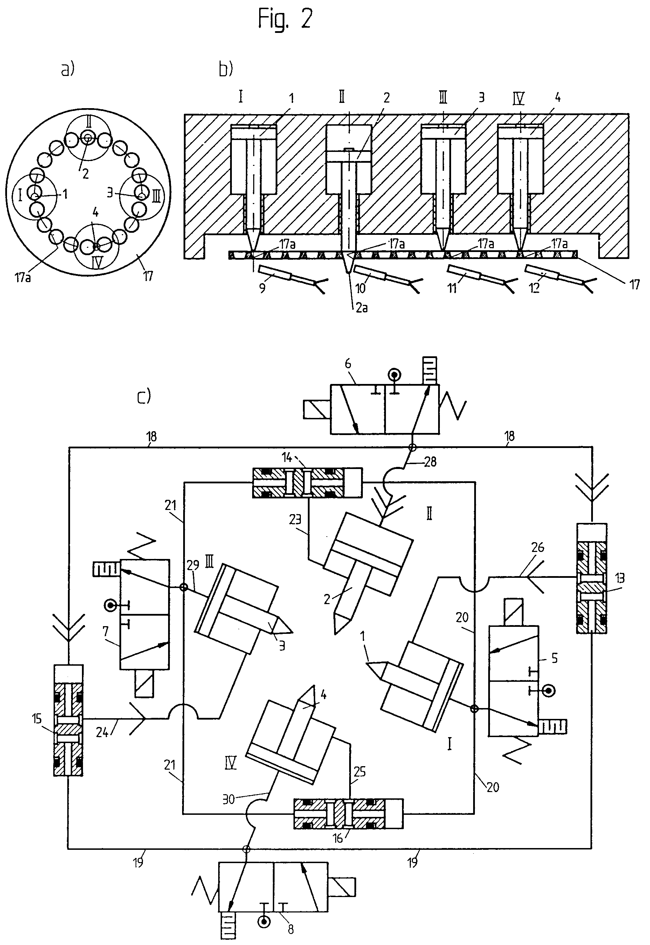

Anhand der Fig. 2a, 2b und 2c wird ein erster Schritt des Schrittmotors im Gegenuhrzeigersinn aus der in den Fig. 1a, 1b und 1c dargestellten Ruhestellung heraus illustriert. Dies geschieht dadurch, dass als erstes das 3/2 Wege-Ventil 6 elektrisch durch die hier nicht dargestellte und nicht Bestandteil der Erfindung bildende Steuerelektronik erregt wird. Dadurch baut sich Druck auf der Rückseite des Arbeitskolbens 2 in der Kolbenstation II und der Wechselventile 13 und 15 auf, wie dies anhand der Doppelpfeile veranschaulicht ist. Der Arbeitskolben 2 und die Wechselventile 13 und 15 werden dadurch gleichzeitig oder zumindest annähernd gleichzeitig in Bewegung gesetzt. Dadurch dass die Wechselventile 13 und 15 als Kolben ausgebildet sind, werden die Leitungen 26 und 24 erst durch Druck beaufschlagt, nachdem die Wechselventile 13 und 15 Ihre Bewegungen ausgeführt haben. Dies bewirkt eine leichte Zeitverzögerung bei der Beaufschlagung der Arbeitskolben 1 und 3 mit Druck, was anhand der Einfachpfeile veranschaulicht ist. Durch diese Zeitverzögerung und die kleinere vordere Kolbenfläche (Ringkolben) der Arbeitskolben 1 + 2 wird garantiert, dass der Arbeitskolben 2 füher mit einer Bohrung 17a des Rotors 17 im Eingriff steht als dass der Arbeitskolben 1 seine Rückzugsbewegung aus einer anderen Bohrung 17a des Rotors 17 ausgeführt hat. Dadurch ist sichergestellt, dass der Rotor 17 jederzeit mit einem der Arbeitskolben 1 oder 2 im Eingriff steht und sich nie unkontrolliert um sein Zentrum drehen kann. Sobald der Quittierschalter 9 das Erreichen der Endlage des Arbeitskolbens 2 quittiert, wird die Erregung des 3/2 Wege-Ventils 6 beendet und ein vollständiger Schritt des Schrittmotors in eine weitere Ruhestellung ist abgeschlossen.

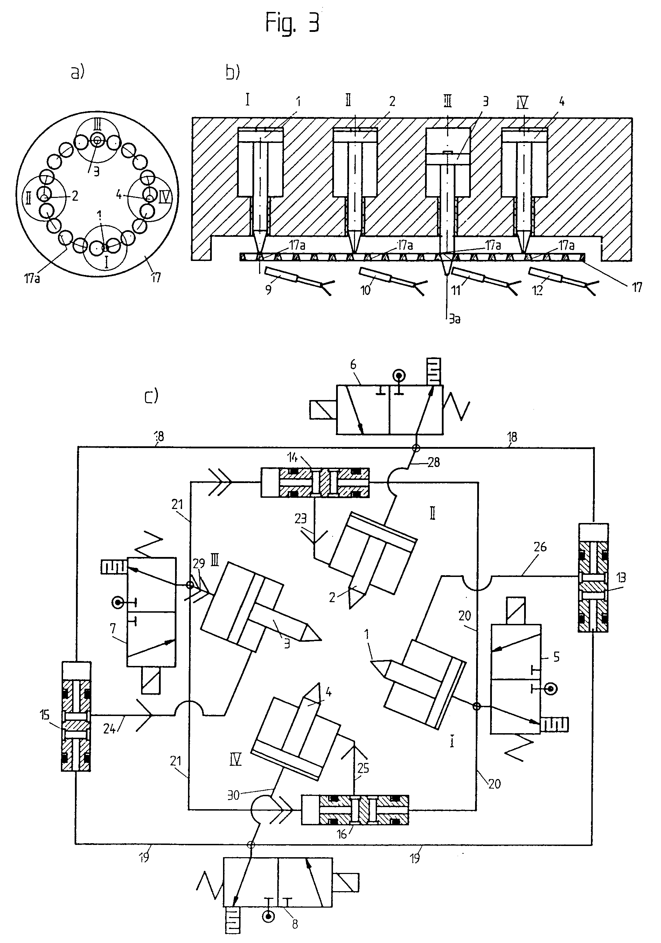

Anhand der Fig. 3a, 3b und 3c wird ein zweiter Schritt des erfindungsgemässen Schrittmotors beschrieben. Dazu bedarf es einer elektrischen Erregung des 3/2 Wege-Ventils 7, derart, dass sich auf der Rückseite des Arbeitskolbens 3 und in den Wechselventilen 16 und 14 Druck aufbaut, wie dies anhand der Doppelpfeile veranschaulicht ist. Der Arbeitskolben 3 und die Wechselventile 14 und 16 bewegen sich zumindest ungefähr gleichzeitig. Dadurch, dass die Wechselventile 14 und 16 ebenfalls als Kolben ausgebildet sind, werden die Leitungen 23 und 25 erst unter Druck gesetzt, nachdem die Wechselventile 14 und 16 ihre Bewegungen ausgeführt haben. Dies ergibt somit eine leichte Zeitverzögerung. Durch diese Zeitverzögerung und die kleinere Kolbenfläche (Ringkolben) der Arbeitskolben 2 und 4 wird garantiert, dass der Arbeitskolben 3 füher mit einer Bohrung 17a des Rotors 17 im Eingriff steht als dass der Arbeitskolben 2 seine Rückzugsbewegung aus seiner Bohrung 17a abgeschlossen hat. Dies wiederum stellt sicher, dass der Rotor 17 ununterbrochen mit dem einen oder dem anderen der Arbeitskolben 2 oder 3 im Eingriff steht und in keinem augenblick unkontrolliert verdreht werden kann. Auch das 3/2 Wege-Ventil 7 ist nur so lange erregt, bis der Quittierschalter 11 das Erreichen der Endlage des Arbeitskolbens 3 quittiert.

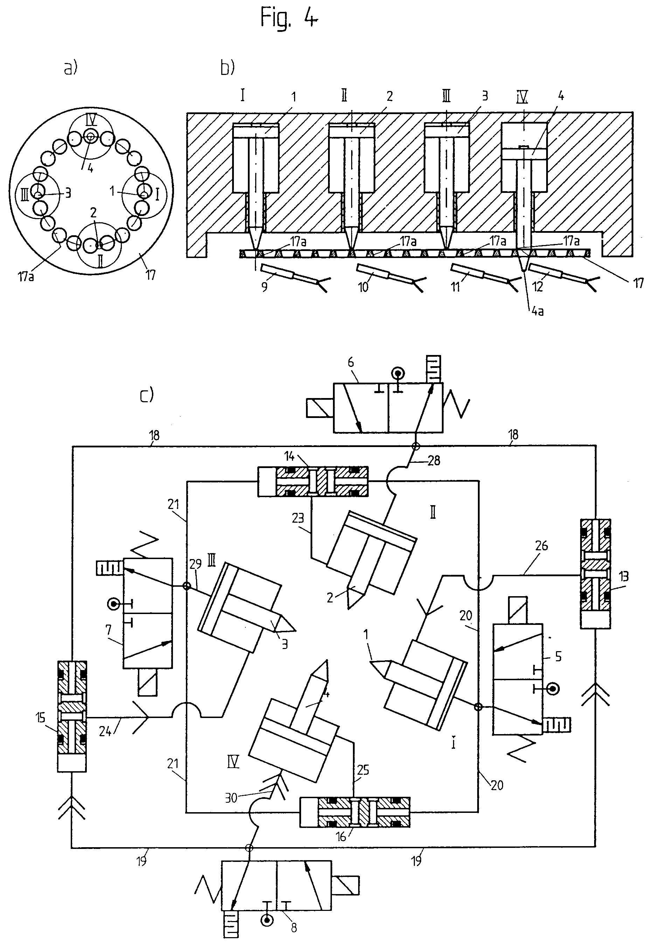

Anhand der Fig. 4a, 4b und 4c wird ein dritter Schritt des erfindungsgemässen Schrittmotors illustriert. Dazu wird als erstes das 3/2 Wege-Ventil 8 erregt. Dann baut sich auf der Rückseite des Kolbens 4 und in den Wechselventilen 13 und 15 ein Druck auf, wie dies anhand der Doppelpfeile dargestellt ist. Der Arbeitskolben 3 und die Wechselventile 13 und 15 bewegen sich dadurch zumindest annähernd gleichzeitig. Dadurch, dass die Wechselventile 13 und 15 auch als Kolben ausgebildet sind, werden die Leitungen 26 und 24 erst unter Druck gesetzt, nachdem die Wechselventile 13 und 15 Ihre Bewegungen ausgeführt haben. Dies ergibt eine leichte Zeitverzögerung. Durch diese Zeitverzögerung und die kleinere vordere Kolbenfläche (Ringkolben) der Arbeitskolben 1 und 3 wird garantiert, dass der Arbeitskolben 4 füher mit einer Bohrung 17a des Rotors 17 im Eingriff steht, als dass der Arbeitskolben 3 seine Rückzugsbewegung aus einer anderen Bohrung 17a abgeschlossen hat. Auch während diesem Schritt des erfindungsgemässen Schrittmotors steht der Rotor 17 permanent mit dem einen oder dem anderen der beiden Arbeitskolben 3 oder 4 im Eingriff und ist dauernd vor ungewollter Verdrehung geschützt. Auch das 3/2 Wege-Ventil 7 ist nur so lange erregt, bis der Quittierschalter 12 quittiert hat, dass der Arbeitskolben 4 seine Endlage erreicht hat.

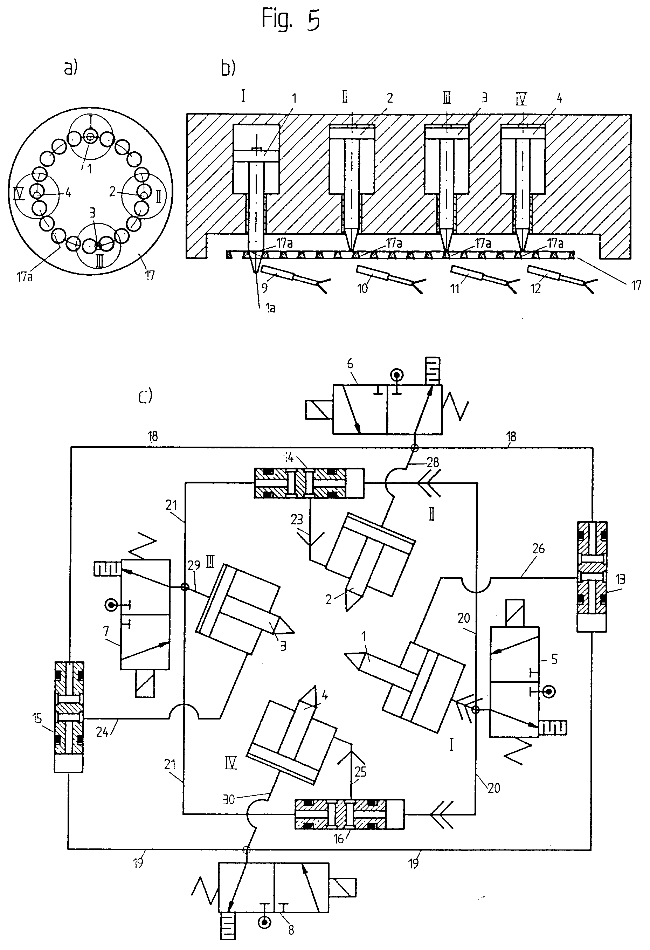

Anhand der Fig. 5a, 5b und 5c wird ein vierter Schritt des erfindungsgemässen Schrittmotors beschrieben. Dazu wird als erstes das 3/2 Wege-Ventil 5 erregt. Dadurch baut sich auf der Rückseite des Arbeitskolbens 1 und in den Wechselventilen 14 und 16 sofort ein Druck auf, wie dies anhand der Doppelpfeile veranschaulicht ist. Der Arbeitskolben 3 und die Wechselventile 14 und 16 bewegen sich zumindest annähernd gleichzeitig. Dadurch, dass die Wechselventile 14 und 16 auch als Kolben ausgebildet sind, werden die Leitungen 23 und 25 erst mit Druck beaufschlagt, nachdem die Wechselventile 14 und 16 Ihre Bewegungen ausgeführt haben. Dies ergibt eine leichte Zeitverzögerung. Durch diese Zeitverzögerung und die kleinere vordere Kolbenfläche (Ringkolben) der Arbeitskolben 2 und 4 wird garantiert, dass der Arbeitskolben 1 früher mit einer Bohrung 17 a des Rotors 17 im Eingriff steht, als dass der Arbeitskolben 4 seine Rückzugsbewegung aus einer entsprechenden Bohrung 17 a abgeschlossen hat. Das 3/2 Wege-Ventil 5 ist auch nur so lange erregt, bis der Quittierschalter 9 das Erreichen der Endstellung des Arbeitskolbens 1 quittiert. Nach Abschluss dieses vierten Schrittes steht der erfindungsgemässe pneumatische Schrittmotor in der genau gleichen Ruhestellung wie zu Beginn anhand der Fig. 1a, 1b und 1c beschrieben, nur dass der Rotor 17 sich um eine Lochteilung im Gegenuhrzeigersinn gedreht hat.

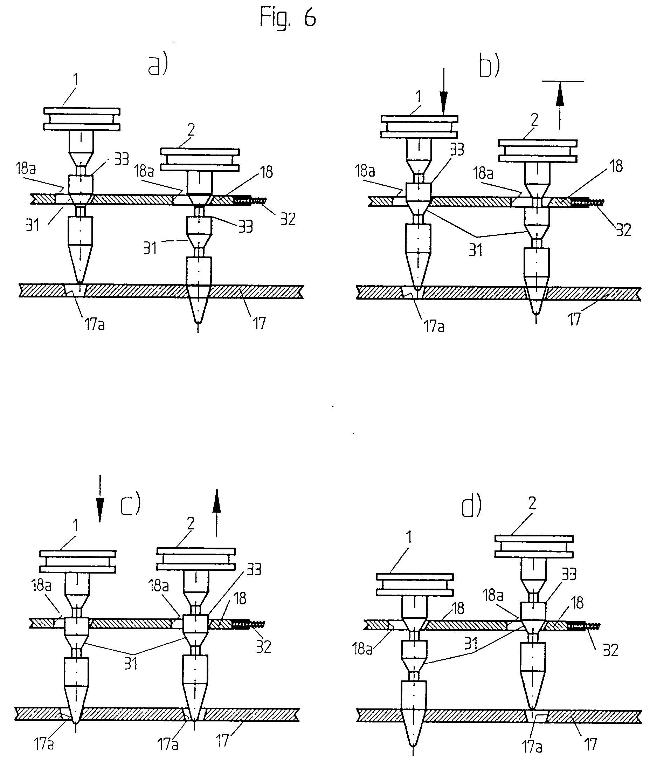

Die Fig. 6 zeigt eine Möglichkeit der Ausführung einer zusätzlichen mechanischen Verriegelung der Arbeitskolben 1 bis 4 in ihren jeweiligen relativen Endlagen, wenn sie in Bohrungen 17a des Rotors engagiert sind. Selbstverständlich gibt es noch andere Möglichkeiten der Verriegelung, beispielsweise mechanisch mit pneumatischer Ansteuerung oder die Arbeitskolben1 bis 4 als Schieberventil an der Kolbenstange auszubilden und damit eine Rückführung des Vorkolbens erst ab einer bestimmten Position zu ermöglichen. Es käme allenfalls auch eine Lösung mit bistabilen 4/2 Wege-Ventilen in Frage, die die Arbeitskolben einzeln ansteuern. Dies kann auch mit monostabilen 4/2 Wege- Ventilen erreicht werden, wobei aber in diesem Fall nach einem Spannungsunterbruch das Erkennen der Lage des Schrittmotores nicht mehr gewährleistet ist.

Aus den Fig. 6a, 6b, 6c und 6d erkannt man, dass bei Verwendung dieser Verrigelung die Arbeitskolben 1 bis 4 mit Kerben versehen sein müssen, um die gewünschte Funktionsweise zu ermöglichen.

Die Fig. 6a zeigt eine beispielsweise Ausgangslage der beiden Arbeitskolben 1 und 2 vor einer beabsichtigten Verdrehung des Rotors 17 im Uhrzeigersinn, in welcher der Arbeitskolben 2 mit einer ersten Bohrung 17a des Rotors 17 im Eingriff steht und der Arbeitskolben 1 leicht versetzt zu der Achse einer weiteren Bohrung 17a zurückgezogen steht. In Fig. 6b wird die Startphase dieser Verdrehung gezeigt. Da die pneumatische Verbindung und Schaltung der einzelnen Schrittmotorkomponenten bei dieser Ausführungsvariante eines erfindungsgemässen Schrittmotors gleich wie bei der weiter oben beschriebenen Ausführungsvariante ohne mechanische Verriegelung der Arbeitskolben 1 bis 4 ist, bewegt sich zuerst der Arbeitskolben 1 nach unten. Sobald dieser eine Bewegung gemacht hat die genügt, dass er sicher mit der sich unterhalb von ihm befindlichen Bohrung 17a des Rotors 17 im Eingriff steht, schiebt er mit einer Konuskante 31 die Verriegelungsplatte 18, die von einer Feder 32 vorgespannt ist, auf die Seite und ermöglicht dem Arbeitskolben 2, der durch eine Bohrung 18a der Verriegelungsplatte 18 hindurchtritt und von deren Rand verriegelt worden ist, eine vollständige Rückwärtsbewegung. Sollte der Arbeitskolben 1 aus irgend einem Grunde seine Hubbewegung nicht ausführen, bleibt der Arbeitskolben 2 mit seiner Kerbenkante 33 an der Verriegelungsplatte 18 hängen. Dadurch wird der Rotor 17 weiterhin durch den Arbeitskolben 2 gegen ungewollte Verdrehung geschützt. In Fig. 6c ist der normale Arbeitsablauf der beiden Arbeitskolben 1 und 2 dargestellt. In Fig. 6d ist die Lage dieser Arbeitskolben 1 und 2 und der Verriegelungsplatte 18 sowie des Rotors 17 nach Abschluss dieses Schrittes des Schrittmotors gezeigt. Für eine sichere Funktion sollte somit die Teilung des Arbeitskolben 1 - 4 einem beliebigen Mehrfachen der Teilung der Bohrung 17a plus ¹/₄ einer Teilung der Bohrung 17a entsprechen.

Der Fachmann erkennt anhand des Vorerwähnten und aus der Zeichnung leicht, dass der erfindungsgemässe Schrittmotor einfach von Rechts- auf Linksdrehung umgestellt werden kann, indem die Reihenfolge der Betätigung der Kolbenstationen I bis IV umgedreht wird. Er erkennt ferner, dass mit relativ kleinen pneumatischen Drücken hohe Drehmomente am Rotor 17 bewirkt werden können und dass letzterer gegen sehr hohe von aussen auf ihn einwirkende Verdrehungskräfte immun ist, derart, dass der erfindungsgemässe Schrittmotor nicht nur während der einzelnen Schritte, sondern auch dazwischen, wenn er weder elektrische noch pneumatische Energie zugeführt erhält, permanent gegen ungewollte Verdrehungen geschützt ist.

Es ist für den Fachmann weiter naheliegend, dass die hiervor schematisch dargestellte und in ihrer Funktion erläuterte rotative Ausführungsvariante eines erfindungsgemässen Schrittmotors auch mit linearer Anordnung der Kolbenstationen und einer linearen Lochstange anstelle des Rotors umgebaut werden kann, ohne dass es dazu besonderer erfinderischer Tätigkeiten bedürfte.

Für den Fachmann lassen sich Detailänderungen in der Konstruktion des beschriebenen erfindungsgemässen Schrittmotors ebenfalls ohne erfinderisches Dazutun realisieren, sofern dies der vorgesehene Einsatz des Motors notwendig machen sollte. Insbesondere lässt sich die Zahl der im erfindungsgemässen Schrittmotor verwendeten Kolbenstationen problemlos verändern, unabhängig davon, ob es sich um einen linearen oder rotativen Schrittmotor handelt.

## Patentansprüche

1. Schrittmotor, enthaltend Steuerelemente (5 - 16) und von diesen gesteuerte pneumatische Arbeitskolben (1 - 4) mit konisch zugespitzten Kolbenspitzen, (1a, 2a, 3a, 4a) sowie einen durch diese Arbeitskolben (1 - 4) schrittweise in Bewegung versetzbaren Läufer (17), der mit konischen Bohrungen (17a) versehen ist, wobei die Bohrungen (17a) für ein Zusammenwirken mit den Arbeitskolben (1 - 4) ausgelegt sind, **dadurch gekennzeichnet**, dass die Steuerelemente (5 - 16) elektro-pneumatische Ventile (5 - 8) und Wechselventile (13 - 16) umfassen, wobei die Wechselventile (13 - 16) derart ausgeführt sind, dass eine Zeitverzögerung zwischen der Beaufschlagung des ausfahrenden Arbeitskolbens und der Beaufschlagung des einfahrenden Arbeitskolbens mit Druck bewirkt ist.

2. Schrittmotor nach Anspruch 1, **dadurch gekennzeichnet**, dass jeder Arbeitskolben (1 - 4) kolbenrückseitig mit einem der elektro-pneumatischen Ventile (5 - 8) und kolbenseitig mit einem der Wechselventile (13 - 16) wirkverbunden ist.

3. Schrittmotor nach Anspruch 1, **dadurch gekennzeichnet**, dass die elektro-pneumatischen Ventile (5 - 8) 3/2 Wege-Ventile sind.

4. Schrittmotor nach Anspruch 1, dadurch gekennzeichnet, dass je zwei Wechselventile (13 - 18) als ODER-Schaltung zusammengeschlossen sind.

5. Schrittmotor nach Anspruch 3 und 4, dadurch gekennzeichnet, dass jedes 3/2 Wege-Ventil (5 - 8) gleichzeitig mit je einem Arbeitskolben (1 - 4) und zwei Wechselventilen (13 - 16) wirkverbunden ist.

6. Schrittmotor nach Anspruch 1, dadurch gekennzeichnet, dass die Arbeitskolben (1 - 4) und die Bohrungen (17a) des Rotors (17) auf identischen mit dem Rotorzentrum konzentrischen Kreisen angeordnet sind und die Teilung der Arbeitskolben (1 - 4) einem beliebigen Mehrfachen der Teilung der Bohrungen (17a) plus 1/4 einer Teilung der Bohrungen (17a) entspricht.

## Claims

1. Stepping motor containing control elements (5 - 16) and pneumatic working pistons (1 - 4) which are controlled by the latter and have conically pointed piston tips (1a, 2a, 3a, 4a), as well as a rotor (17) which can be set in stepwise motion by these working pistons (1 - 4) and is provided with conical bores (17a), the bores (17a) being designed to cooperate with the working pistons (1 - 4), characterized in that the control elements (5 - 16) comprise electropneumatic valves (5 - 8) and shuttle valves (13 - 16), the shuttle valves (13 - 16) being designed such that a time delay is effected between the application of pressure to the outwardly moving working piston and the application of pressure to the inwardly moving working piston.

2. Stepping motor according to Claim 1, characterized in that each working piston (1 - 4) is operationally connected at the rear end of the piston to one of the electropneumatic valves (5 - 8) and on the piston side to one of the shuttle valves (13 - 16).

3. Stepping motor according to Claim 1, characterized in that electropneumatic valves (5 - 8) are 3/2-way valves.

4. Stepping motor according to Claim 1, characterized in that two shuttle valves (13 - 18) each are interconnected as an OR circuit.

5. Stepping motor according to Claims 3 and 4, characterized in that each 3/2-way valve (5 - 8) is simultaneously operationally connected to in each case one working piston (1 - 4) and two shuttle valves (13 - 16).

6. Stepping motor according to Claim 1, characterized in that the working pistons (1 - 4) and the bores (17a) of the rotor (17) are arranged on identical circles which are concentric with the rotor centre, and the spacing of the working pistons (1 - 4) corresponds to an arbitrary multiple of the spacing of the bores (17a) plus 1/4 of a spacing of the bores (17a).

## Revendications

1. Moteur pas à pas comportant des éléments de commande (5-16) et des pistons actifs pneumatiques (1-4) commandés par ceux-ci, avec des pointes de pistons (1a, 2a, 3a, 4a) coniques, ainsi qu'un rotor (17) mis en mouvement pas à pas par ces pistons actifs (1-4), ce rotor étant muni de perçages coniques (17a) conçus pour coopérer avec les pistons actifs (1-4), caractérisé en ce que les éléments de commande (5-16) sont des soupapes électropneumatiques (5-8) et des soupapes alternatives (13-16), les soupapes alternatives (13-16) étant réalisées pour arriver à une décélération entre la sollicitation du piston actif qui se déploie et la coopération avec le piston actif rentrant, sous pression.

2. Moteur pas à pas selon la revendication 1, caractérisé en ce que chaque piston actif (1-4) coopère, du côté opposé au piston, avec l'une des soupapes électropneumatiques (5-8) et, du côté du piston, avec l'une des soupapes alternatives (13-16).

3. Moteur pas à pas selon la revendication 1, caractérisé en ce que les soupapes électropneumatiques (5-8) sont des distributeurs à tiroir à 3/2 voies.

4. Moteur pas à pas selon la revendication 1, caractérisé en ce que chaque fois deux soupapes alternatives (13-18) sont combinées sous la forme d'une porte OU.

5. Moteur pas à pas selon les revendications 3 et 4, caractérisé en ce que chaque distributeur à tiroir à 3/2 voies (5-8) coopère simultanément avec chaque fois un piston actif (1-4) et deux soupapes alternatives (13-16).

6. Moteur pas à pas selon la revendication 1, caractérisé en ce que les pistons actifs (1-4) et les perçages (17a) du rotor (17) sont prévus sur des cercles concentriques identiques au centre du rotor, et le pas des pistons actifs (1-4) correspond à un multiple quelconque du pas des perçages (17a) augmenté de 1/4 du pas des perçages (17a).
